(19) **Europäisches Patentamt**

**European Patent Office**

**Office européen des brevets**

(11) **EP 1 365 906 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(51) Int Cl.⁷: **B29C 47/40**, B29C 47/60, F04C 2/08

(21) Anmeldenummer: **02712802.4**

(22) Anmeldetag: **22.02.2002**

(86) Internationale Anmeldenummer:
**PCT/DE2002/000707**

(87) Internationale Veröffentlichungsnummer:
**WO 2002/070231 (12.09.2002 Gazette 2002/37)**

(54) **SCHNECKENPUMPE UND MEHRSCHNECKENEXTRUDER MIT EINER SOLCHEN SCHNECKENPUMPE**

SCREW PUMP AND MULTI-SCREW EXTRUDER COMPRISING A SCREW PUMP OF THIS TYPE

POMPE A VIS ET EXTRUDEUSE A PLUSIEURS VIS COMPRENANT UNE TELLE POMPE A VIS

(84) Benannte Vertragsstaaten:
**AT DE IT**

(30) Priorität: **06.03.2001 DE 10112028**

(43) Veröffentlichungstag der Anmeldung:
**03.12.2003 Patentblatt 2003/49**

(73) Patentinhaber: **Berstorff GmbH**
**30625 Hannover (DE)**

(72) Erfinder: **CHSZANIECKI, Gregor**
**30625 Hannover (DE)**

(74) Vertreter: **Meissner, Peter E.**
**Meissner & Meissner,**
**Patentanwaltsbüro,**
**Hohenzollerndamm 89**
**14199 Berlin (DE)**

(56) Entgegenhaltungen:
**EP-A- 0 769 361          DE-A- 19 947 967**
**DE-B- 1 129 962          DE-C- 567 478**
**US-A- 6 116 771**

- **PATENT ABSTRACTS OF JAPAN vol. 1997, no. 08, 29. August 1997 (1997-08-29) -& JP 09 109231 A (TOSHIBA MACH CO LTD), 28. April 1997 (1997-04-28)**

**Beschreibung**

Die Erfindung betrifft eine Schneckenpumpe mit einem Eintrittsquerschnitt und einem Austrittsquerschnitt zur Förderung fließfähiger Medien, insbesondere zur Förderung von Kunststoffschmelzen und Kautschukmischungen, sowie einen Mehrschneckenextruder mit einer Druckerhöhungszone.

Aus der EP 0564884 A1 ist ein Doppelschneckenextruder mit zwei gleichsinnig angetriebenen Schneckenwellen bekannt, die in axialer Richtung zur Bildung unterschiedlicher Extruderabschnitte mit verschiedenen Schneckenelementen bestückt sind, und der eine Druckerhöhungszone in Form einer Zahnradpumpe aufweist. Die Zahnräder der Zahnradpumpe sind dabei auf den Schneckenwellen gelagert. Das eine Zahnrad ist dabei drehfest mit der Schneckenwelle verbunden, während das andere Zahnrad relativ auf der anderen Schneckenwelle drehbar ist. Die beiden axialen Stirnseiten der Zahnräder sind von Dichtplatten abgedeckt, die zusammen mit dem Extruderzylinder ein Pumpengehäuse bilden. In den Dichtplatten ist jeweils zur Gewährleistung des Materialflusses eine Eintrittsöffnung bzw. eine Austrittsöffnung eingearbeitet. Mit dieser Druckerhöhungszone in Form einer Zahnradpumpe wird der Nachteil gleichsinnig angetriebener Doppelschneckenextruder beseitigt, der darin zu sehen ist, dass dieses Aggregat nur sehr schlecht zum Aufbau eines ausreichenden Extrusionsdrucks geeignet ist. Ohne eine spezielle Schmelzenpumpe wäre für eine ausreichende Extrusionsdruckerzeugung eine außerordentlich große Extruderlänge notwendig. Ein Nachteil dieser bekannten Lösung ist darin zu sehen, dass nur eines der beiden Zahnräder der Zahnradpumpe motorisch angetrieben werden kann. Außerdem stellt die stimseitige Dichtwand des Pumpengehäuses ein Strömungshindemis dar, an dem Volumenelemente des zu fördernden Materials unkontrolliert lange verweilen können, bis sie von der Zahnradpumpe weitergefördert werden.

Aus der DE 199 47 967 A1 ist ein anderer Doppelschneckenextruder bekannt, dessen Schneckenwellen gleichsinnig angetrieben sind und die mit unterschiedlichen Schneckenelementen zur Ausbildung unterschiedlicher Extruderabschnitte bestückt sind. Dieser Extruder besitzt u.a. eine Mischzone, in der auf den beiden Schneckenwellen Knetblöcke angebracht sind, die aus einzelnen Knetscheiben bestehen. Bei diesen Knetscheiben handelt es sich jeweils um Profile, die als eingängige Schneckenelemente mit der Steigung Null bezeichnet werden können und als dichtkämmende Profile ausgebildet sind, die auch als Erdmenger-Profile bezeichnet werden. Sie weisen jeweils einen sich über einen Kammwinkel $\gamma$ erstreckenden zylindermantelförmigen Steg auf, dessen Radius unter Berücksichtigung eines technisch notwendigen Spiels dem Radius der Gehäusebohrung des Extruders entspricht. Diametral gegenüberliegend zum Steg ist ein weiterer zylindermantelförmiger Teil vorhanden, der als Schneckengrund zu bezeichnen ist und sich über einen Grundwinkel $\alpha$ in Umfangsrichtung erstreckt. Der Radius dieses zylindermantelförmigen Teils entspricht dem Kemdurchmesser der Schnecke. Beide zylindermantelförmigen Teile sind im Querschnitt durch die Schneckenwelle gesehen durch kreisbogenförmige Flanken miteinander verbunden, die entsprechend der Theorie von Erdmenger ein dichtes Kämmen mit dem jeweils auf der anderen Schneckenwelle angeordneten und mit dem betrachteten Schneckenelement zusammenwirkenden Schneckenelement gewährleisten. Die zusammenwirkenden Schneckenelemente auf den beiden Schneckenwellen bilden eine im Folgenden als Paarung von Schneckenelementen bezeichnete Einheit. Charakteristisch für den bekannten Schneckenextruder ist es, dass die beiden Schneckenelemente einer Paarung jeweils eine vollständig gleiche Kontur aufweisen und lediglich um einen Winkel verdreht zueinander auf den beiden Schneckenwellen befestigt sind. Diese Schneckenelemente werden in dem bekannten Extruder als Quetschereinheiten eingesetzt, die eine besonders hohe Scher- und Dehnströmung in dem zu behandelnden Material erzeugen sollen. Innerhalb der Gehäusebohrung ist zwischen dem Extrudergehäuse und der jeweiligen Paarung der formgleich ausgebildeten Knetscheiben ein Kammervolumen gebildet, das während einer vollständigen Umdrehung der Knetscheiben in Kammerteilvolumina aufgeteilt wird, deren Größe zeitweilig zunimmt, zeitweilig konstant bleibt und zeitweilig abnimmt. Dadurch, dass die axialen Stirnseiten der Kammerteilvolumina durch Dichtscheiben, die vorzugsweise ebenfalls als dichtkämmende Knetscheiben ausgebildet sind, vollständig oder weitgehend abgedeckt werden, können extrem hohe Scher- und Dehnströmungen erzwungen werden. Eine Verwendung dichtkämmender eingängiger Schneckenelemente zur Erzeugung einer Druckerhöhungszone in einem Doppelschneckenextruder wird in die DE 199 47 967 A1 nicht erwogen.

Eine Pumpe nach dem Oberbegriff von Anspruch 1 ist aus des DE-B-1 129 962 bekannt.

Aufgabe der vorliegenden Erfindung ist es, eine neuartige Pumpe mit einem Eintrittsquerschnitt und einem Austrittsquerschnitt zur Förderung beliebiger fließfähiger Medien sowie einen Mehrschneckenextruder mit einer neuartigen Druckerhöhungszone vorzuschlagen.

Gelöst wird diese Aufgabe durch eine Schneckenpumpe mit den im Patentanspruch 1 angegebenen Merkmalen sowie durch einen Mehrschneckenextruder mit den Merkmalen des Patentanspruchs 11. Vorteilhafte Weiterbildungen der erfindungsgemäßen Schneckenpumpe ergeben sich aus den Patentansprüchen 2 bis 10.

Die erfindungsgemäße Schneckenpumpe weist einen Eintrittsquerschnitt und einen Austrittsquerschnitt für das zu fördemde fließfähige Medium, das insbesondere aus Kunststoffschmelzen oder Kautschukmischungen gebildet sein kann. Grundsätzlich sind aber auch andere Medien förderbar. Die Schneckenpumpe besitzt zumindest zwei Schneckenwellen, die in einem Pumpengehäuse in zumindest zwei sich teilweise überlappenden und das Pumpengehäuse in Längsrichtung durchsetzenden Gehäusebohrungen angeordnet sind. Auf allen Schneckenwellen, die einen Achsabstand a von ihren benachbarten Schneckenwellen Anordnungen haben und gleichsinnig drehend antreibbar sind, sind eine Vielzahl von Paarungen miteinander im Wesentlichen dichtkämmender eingängiger Schneckenelemente drehfest angeordnet. Im axialen Querschnitt weisen die Schneckenelemente jeweils, von der Längsachse der Schneckenwelle aus gesehen, einen zylindermantelförmigen Steg auf, dessen Radius $R_a$ dem Radius der Gehäusebohrung entspricht und der sich in Umfangsrichtung zwischen zwei Stegkanten Ober einen Kammwinkel $\gamma$-erstreckt. Weiterhin weisen die Schneckenelemente auf der dem Steg diametral gegenüber liegenden Seite jeweils einen weiteren zylindermantelförmigen Teil auf, der als Grund bezeichnet wird und dessen Radius $R_i$ der Differenz des Achsabstands a und des Radius $R_a$ entspricht und der sich in Umfangsrichtung über einen Grundwinkel $\alpha$ erstreckt. Der Grund und der Steg eines Schneckenelements sind jeweils durch Flanken miteinander verbunden. Vorzugsweise sind diese Flanken in der Weise kreisbogenförmig ausgebildet, dass sich über den gesamten Umfang der Schneckenelemente einer Anordnung ein dichtes Kämmen ergibt. Im Unterschied zu den Knetscheiben, die gemäß DE 199 47 967 A1 zu Quetscherblöcken zusammengeschaltet sind, weisen die Schneckenelemente einer Anordnung von miteinander kämmenden Schneckenelementen nicht die gleiche Form auf. Vielmehr ist erfindungsgemäß vorgesehen, dass die miteinander kämmenden Schneckenelemente jeweils unterschiedlich große Kammwinkel $\gamma$ besitzen. Ein Schneckenelement hat daher einen großen Kammwinkel $\gamma_1$, während die mit diesem kämmenden Schneckenelemente einen kleinen Kammwinkel $\gamma_2$ haben. Die Schneckenelemente sind dabei auf allen Schneckenwellen jeweils in der Weise hintereinander angeordnet, dass jeweils ein Schneckenelement mit dem kleinen Kammwinkel einer Anordnung von miteinander kämmenden Schneckenelementen mit dem großen Kammwinkel der unmittelbar in axialer Richtung benachbarten Anordnung abwechselt. Zwei axial zueinander nächstliegende Schneckenelemente mit jeweils dem großen Kammwinkel $\gamma_1$ zwischen denen jeweils nur ein Schneckenelement mit dem kleinen Kammwinkel $\gamma_2$ liegt, sind erfindungsgemäß in der Weise um einen Versatzwinkel $\epsilon$ verdreht zueinander auf der Schneckenwelle angeordnet, dass je nach vorgesehener Förderrichtung die linke oder rechte Stegkante des einen Schneckenelements mit großem Kammwinkel $\gamma_1$ in der Nähe der jeweils anderen (rechten bzw. linken) Stegkante des anderen Schneckenelements liegt, wobei die Stege der beiden Schneckenelemente mit dem großen Kammwinkel jeweils im Bereich der beiden nahe beieinander liegenden Stegkanten durch den Steg des dazwischen angeordneten Schneckenelements mit dem kleinen Kammwinkel verbunden sind, so dass jeweils ein Schneckengang mit unstetiger Steigung gebildet ist. Durch axiales Hintereinanderanordnen einer ausreichend großen Anzahl von Schneckenelementen wird auf diese Weise zwischen dem Eintrittsquerschnitt und dem Austrittsquerschnitt eine axiale Abdichtung erzielt, wenn man das technisch notwendige Spiel zwischen den einzelnen Elementen vernachlässigt. Zwischen dem Eintritts- und dem Austrittsquerschnitt bilden sich in axialer Richtung untereinander volumetrisch abgeschlossene Kammern aus, die sich jeweils über mehrere Anordnungen von miteinander kämmenden Schneckenelementen in axialer Richtung erstrecken. Je nach Gestaltung der Schneckenelemente reichen z.B. sieben bis zehn axial hintereinander angeordnete Anordnungen von miteinander kämmenden Schneckenelementen aus. Für die Funktion der Schneckenpumpe ist es nicht zwingend erforderlich, dass die Profile der Schneckenelemente einer Anordnung über den gesamten Umfang dicht kämmend ausgebildet sind. Daher können die Verbindungen zwischen dem Grund und dem Steg eines Schneckenelements abweichend von der dicht kämmenden kreisbogenförmigen Flankenform gestaltet sein. Die Flanken können also auch weiter innenliegend, also näher an der Längsachse der jeweiligen Schneckenwelle verlaufen. Die dicht kämmende Flankenform hat allerdings den großen Vorteil, dass eine solche Schneckenpumpe selbstreinigend ist.

Vorteilhaft ist es, den Versatzwinkel s so zu wählen, dass die beiden axial nahe beieinander liegenden Stegkanten der beiden Schneckenelemente mit dem großen Kammwinkel $\gamma_1$ sich jeweils ohne Versatz in einer anderen Stegkante des dazwischen angeordneten Schneckenelements mit dem kleinen Kammwinkel $\gamma_2$ fortsetzen. In Richtung der Stegkanten gesehen überlappen sich hierbei die beiden Stege der Schneckenelemente mit dem großen Kammwinkel $\gamma_1$ genau um die Breite des Steges des dazwischen angeordneten Schneckenelements mit dem kleinen Kammwinkel $\gamma_2$-Diese Anordnung ist jedoch keineswegs zwingend. Es kann auch eine größere oder kleinere Überdeckung oder sogar eine negative Überdeckung gewählt werden, bei der eine gewisse Undichtigkeit des jeweiligen Kammerteilvolumens bewußt in Kauf genommen wird.

Grundsätzlich ist es möglich, jeder Anordnung der miteinander kämmenden Schneckenelemente eine andere Form der Schneckenelemente zuzuordnen. Aus fertigungstechnischen Gründen empfiehlt es sich jedoch, die Anordnung der kämmenden Schneckenelemente untereinander baugleich auszuführen.

Besonders vorteilhaft ist es, die Schneckenelemente jeweils mit einem Verdrallwinkel $\delta$ zu versehen, da so zusätzlich der bekannte Fördermechanismus von Schneckenelementen (Abstreifen an der Innenoberfläche der Gehäusebohrung) genutzt werden kann. Unter dem Verdrallwinkel $\delta$ wird der Winkel verstanden, um den die beiden axialen Stirnseiten des jeweiligen Schneckenelements gegeneinander um die Längsachse der Schneckenwelle verdreht sind. Dies hat zur Folge, dass die Stegkanten nicht parallel zur Längsachse der Schneckenwelle gerichtet sind, sondern schraubenlinienförmig verlaufen. Zweckmäßigerweise liegt der Verdrallwinkel $\delta$ im Bereich von 10° bis 30°, vorzugsweise im Bereich von 20° -26°. Derartige verdrallte Schneckenelemente weisen gegenüber unverdrallten Schneckenelementen ($\delta = 0°$) ein deutlich besseres Einzugsverhalten hinsichtlich des zu fördernden Materials auf.

**EP 1 365 906 B1**

Der kleine Kammwinkel $\gamma_2$ beträgt bei einer Anordnung von kämmenden Schneckenelementen vorzugsweise weniger als 20°. Bei Schneckenelementen ohne Verdrallwinkel liegt im theoretischen Idealfall der kleine Kammwinkel $\gamma_2$ bei 0°, d.h. dass die linke und die rechte Stegkante jeweils zu einer Kante verschmelzen und der zugeordnete Steg die Breite Null aufweist. Dies ist aber für den praktischen Betrieb weniger brauchbar, weil durch die nicht mehr vorhandene Stegbreite eine sehr viel schlechtere Abdichtung gegenüber dem Zylindergehäuse erfolgt. Besonders zweckmäßige kleine Kammwinkel $\gamma_2$ liegen im Bereich von 5-15°.

Der große Kammwinkel $\gamma_1$ ergibt sich bei Festlegung des kleinen Kammwinkels $\gamma_2$ zwangsläufig, da die Summe beider Kammwinkel $\gamma_1$ und $\gamma_2$ der Beziehung folgt:

$$\gamma_{gesamt} = 360° - 4 \text{ x arc cos } (a/2R_a).$$

Die einzelnen Schneckenelemente können jeweils einstückig ausgebildet werden. Dabei empfiehlt es sich, die Schneckenelemente in an sich bekannter Weise im Bereich der Schneckenachse mit einer Vielkeilverzahnung auszubilden, so dass sie ein Raster für die Einstellung des jeweils gewünschten Versatzwinkels $\varepsilon$ bilden.

Besonders vorteilhaft ist es, die einzelnen Schneckenelemente, insbesondere wenn der Verdrallwinkel $\delta = 0°$ vorliegt, jeweils aus einer Mehrzahl scheibenförmiger Elemente mit gleicher Kontur zusammenzusetzen. Auf diese Weise lassen sich aus völlig baugleichen scheibenartigen Elementen in axialer Richtung beliebig lange Schneckenelemente erzeugen. Die axiale Länge der Schneckenelemente ist bei gegebenem Durchmesser der Gehäusebohrungen ein direktes Maß für die Größe der Kammervolumina der Schneckenpumpe und damit bei gegebener Schneckendrehzahl für deren Förderleistung. Durch unterschiedlich hohe Anzahlen von scheibenförmigen Elementen zur Zusammensetzung eines Schneckenelements lässt sich somit eine Anpassung der Pumpenleistung an die jeweils vorliegende Aufgabe gewährleisten. Wenn der Verdrallwinkel $\delta$ größer als 0° ist, sollte das Rastermaß der Vielkeilwelle so auf den Verdrallwinkel abgestimmt sein, dass die Stegkanten der einzelnen Scheiben sich geradlinig aneinanderfügen lassen.

Es ist vorteilhaft, innerhalb einer Anordnung von miteinander kämmenden Schneckenelementen diese zur Erzeugung eines Axialspiels ohne die sonst erforderliche Zuhilfenahme von Distanzscheiben, die zwischen die Schneckenelemente zu setzen wären, mit leicht unterschiedlicher axialer Länge auszubilden. Die axiale Länge der Schneckenelemente mit dem großen Kammwinkel differiert also entsprechend dem gewünschten Spiel von der axialen Länge der Schneckenelemente mit kleinem Kammwinkel.

Grundsätzlich kann die erfindungsgemäße Schneckenpumpe als separates Aggregat zur Förderung beliebiger Medien verwendet werden. Besonders vorteilhaft ist es jedoch, die Schneckenpumpe als Druckerhöhungszone innerhalb eines Mehrschneckenextruders einzusetzen, der zumindest zwei gleichsinnig angetriebene Schneckenwellen aufweist, die in axialer Richtung zur Bildung unterschiedlicher Extruderabschnitte mit verschiedenen Schneckenelementen bestückt sind. Dabei werden die Schneckenwellen der Schneckenpumpe jeweils unmittelbar mit den Schneckenwellen des Extruders gekoppelt oder sind ein Teil von diesen.

Nachfolgend wird die vorliegende Erfindung anhand der in den Figuren dargestellten Ausführungsbeispiele näher erläutert. Es zeigen:

| | |
|---|---|
| Figur 1 | eine schematische Ansicht eines Querschnitts durch eine erfindungsgemäße Schneckenpumpe, |
| Figur 2 | ein perspektivisches Drahtmodell einer Schneckenwelle mit vier Schneckenelementen, |
| Figur 3 | eine perspektivische Ansicht der beiden Schneckenwellen einer erfindungsgemäßen Schneckenpumpe ohne Verdrallwinkel, |
| Figur 4 | eine Abwandlung der Figur 3 durch Vorsehung eines Verdrallwinkels, |
| Figur 5 und Figur 6 | eine stirnseitige Ansicht einer erfindungsgemäßen Schneckenpumpe, |
| Figur 7 | eine perspektivische Ansicht erfindungsgemäßer Schneckenelemente mit Vielkeilverzahnung und |
| Figur 8 | eine Draufsicht auf die Schneckenelemente gemäß Fig. 7. |

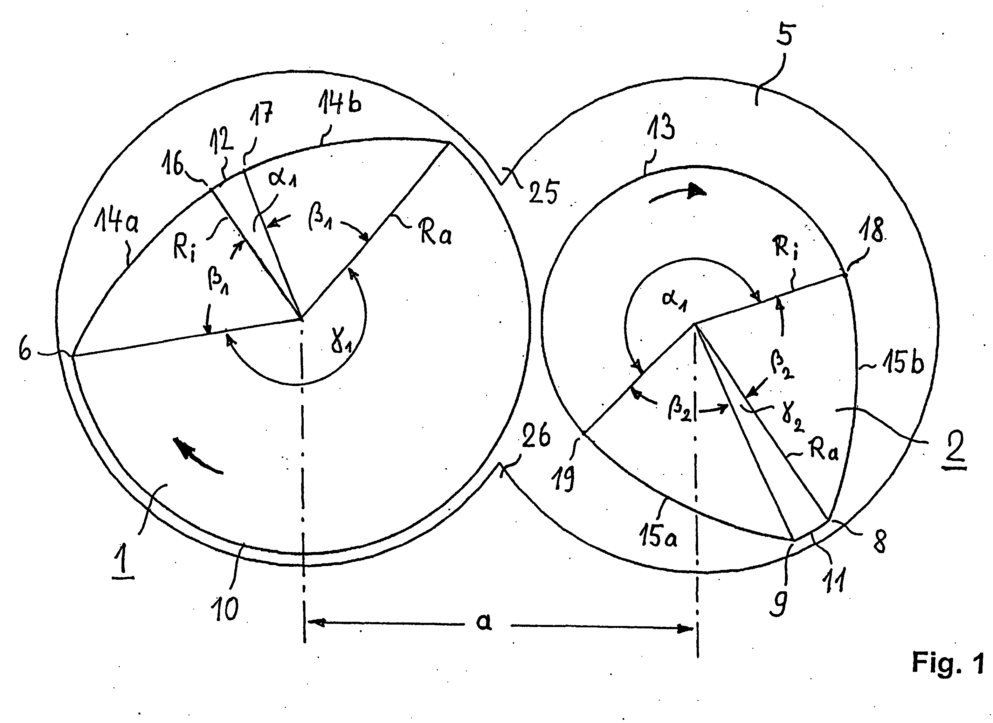

Die schematische Darstellung in Figur 1 zeigt einen Schnitt durch eine erfindungsgemäße Schneckenpumpe, die eine Paarung von Schneckenelementen 1, 2 aufweist. Die Schneckenelemente 1, 2 sind jeweils auf nicht näher dargestellten Schneckenwellen gleichsinnig drehend in Gehäusebohrungen 4, 5 angeordnet, die sich teilweise über-

**4**

lappen. Der Achsabstand der Schneckenwellen ist mit a bezeichnet. Das Schneckenelement 1 weist einen zylindermantelförmigen Steg 10 auf, der in Figur 1 als Kreis mit dem Radius $R_a$ erkennbar ist und sich in Umfangsrichtung über einen Kammwinkel $\gamma_1$ erstreckt. Der Radius $R_a$ entspricht dem Radius der Gehäusebohrung 4. Das Spiel zwischen dem Schneckenelement 1 und der Wand der Gehäusebohrung 4 ist in Figur 1 übertrieben groß dargestellt, ebenso das Spiel zwischen den beiden Schneckenelementen 1, 2. Der Steg 10 wird durch die linke Stegkante 6 und die rechte Stegkante 7 begrenzt. Diametral gegenüberliegend zum Steg 10 ist ein weiterer zylindermantelförmiger Teil des Schneckenelements 1 erkennbar, der als Grund 12 bezeichnet wird und einem dem Radius des Schneckenkerns entsprechenden Radius $R_i$ aufweist. Der Grund 12 erstreckt sich über einen Grundwinkel $\alpha_1$ zwischen den beiden Punkten 16 und 17. Zwischen der Stegkante 6 und dem Punkt 16 bzw. zwischen der Stegkante 7 und dem Punkt 17 verlaufen die beiden sich in Umfangsrichtung jeweils über einen Flankenwinkel $\beta_1$ erstreckenden beiden Flanken 14a, 14b, die jeweils als Kreisbogen gestaltet sind, dessen Mittelpunkt außerhalb der Längsachse der Schneckenwelle angeordnet ist. DieGröße dieses Radius und die Lage des zugehörigen Mittelpunktes ergeben sich aus den bekannten Beziehungen für dicht kämmende Schneckenprofile nach Erdmenger. Das rechte Schneckenelement 2 ist in seiner Form und Größe deutlich verschieden von dem Schneckenelement 1 gestaltet, wenngleich die konstruktive Gestaltung ähnlich ist. Es weist einen zylindermantelförmigen Steg 11 mit dem Radius $R_a$ auf, der sich über einen Kammwinkel $\gamma_2$ zwischen den beiden Stegkanten 8 und 9 erstreckt. Der Kammwinkel $\gamma_2$ ist genauso groß wie der Grundwinkel $\alpha_1$ des Schneckenelements 1. Diametral gegenüber dem Steg 11 ist mit dem Radius $R_i$ ein zweiter zylindermantelförmiger Teil angeordnet, der als Grund 13 bezeichnet ist und sich über den Grundwinkel $\alpha_2$ zwischen den Punkten 18 und 19 erstreckt. Der Grundwinkel $\alpha_2$ hat die gleiche Größe wie der Kammwinkel $\gamma_1$ des Schneckenelements 1. In entsprechender Weise wie bei dem Schneckenelement 1 werden der Grund 13 und der Steg 11 durch kreisbogenförmige Flanken 15a, 15b miteinander verbunden. Die beiden Flanken 15a, 15b erstrecken sich jeweils Ober einen Flankenwinkel $\beta_2$, der gleich groß ist wie der Flankenwinkel $\beta_1$ des Schneckenelements 1. Bei der gleichsinnigen Drehung der beiden Schneckenelemente 1, 2, die durch die eingezeichneten Pfeile angedeutet ist, reiben sich die beiden Schneckenelemente 1, 2, wenn man jeweils zwischen beiden kein Spiel vorsieht, während einer vollständigen Umdrehung der Schneckenwellen in der Weise, dass der Steg 10 ausschließlich mit dem Grund 13, die Flanke 14b ausschließlich mit der Flanke 15a, der Grund 12 ausschließlich mit dem Steg 11 und die Flanke 14a ausschließlich mit der Flanke 15b in Gleitkontakt kommt. Somit ist die Voraussetzung für die Selbstreinigung der Schneckenpumpe gegeben.

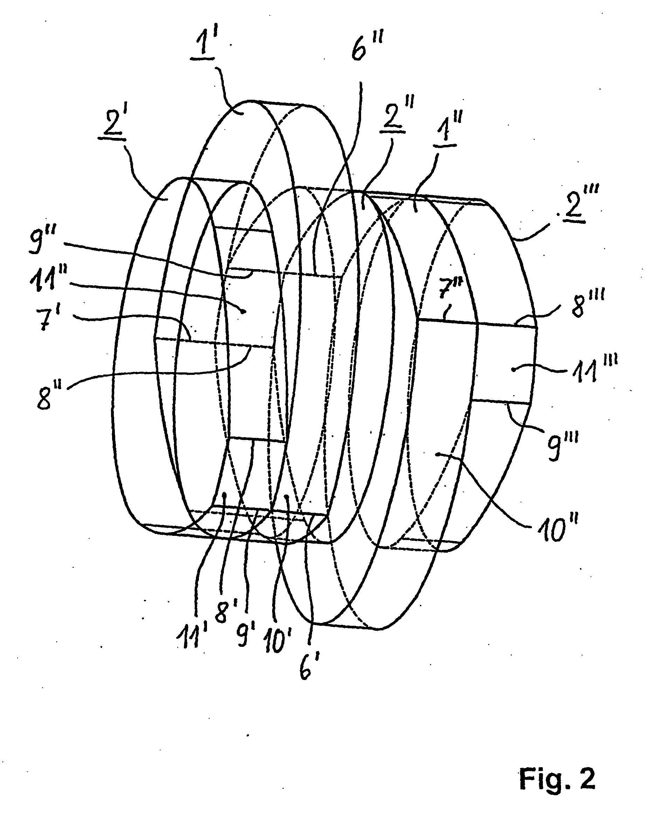

Aus Figur 2, die einen aus fünf Schneckenelementen zusammengesetzten Abschnitt einer Schneckenwelle in Form eines Drahtmodells schematisch zeigt, geht im Einzelnen hervor, wie die Schneckenelemente 1 mit großem Kammwinkel und die Schneckenelemente 2 mit kleinem Kammwinkel verdreht zueinander angeordnet sind. Es sind drei Schneckenelemente 2 mit kleinem Kammwinkel dargestellt, die zur Unterscheidung als 2', 2" bzw. 2''' bezeichnet sind. Zwischen ihnen ist jeweils ein Schneckenelement 1 mit großem Kammwinkel angeordnet, die zur Unterscheidung mit den Bezugszeichen 1', 1" bezeichnet sind. In entsprechender Weise sind unter Beibehaltung der Nummerierung mit zusätzlichen Strichen die jeweils zugehörigen Stegkanten 6 - 9 und die Stege 10, 11 bezeichnet. Die rechte Stegkante 9' des Steges 11' des links außen angeordneten Schneckenelements 2' ist koaxial zur linken Stegkante 6' des unmittelbar daneben angeordneten Schneckenelements 1' mit dem großen Kammwinkel ausgerichtet. Da die beiden Stege 11' und 10' den gleichen Radius $R_a$ aufweisen, besteht zwischen beiden ein glatter Übergang. Verfolgt man den Steg 10' von der rechten Stegkante 6' bis zur linken Stegkante 7', so stellt man fest, dass letztere koaxial ausgerichtet ist zur linken Stegkante 8" des Steges 11" des zweiten Schneckenelements 2" mit kleinem Kammwinkel. Daher ist auch zwischen dem Schneckenelement 1' und dem Schneckenelement 2" ein glatter Übergang vom Steg 10' zum Steg 11" gegeben. Die rechte Stegkante 9" des Stegs 11" wiederum ist koaxial ausgerichtet zur linken Stegkante 6" des Steges 10" des zweiten Schneckenelements 2" mit großem Kammwinkel. Die rechte Stegkante 7" des Stegs 10" ist wiederum koaxial ausgerichtet zur linken Stegkante 8''' eines Stegs 11''' eines dritten Schneckenelements 2''' mit kleinem Kammwinkel. In dieser Weise setzt sich die Schneckenwelle mit beliebig großer Zahl an Schneckenelementen abwechselnd zwischen Schneckenelementen 1 mit großem Kammwinkel und Schneckenelementen 2 mit kleinem Kammwinkel fort.

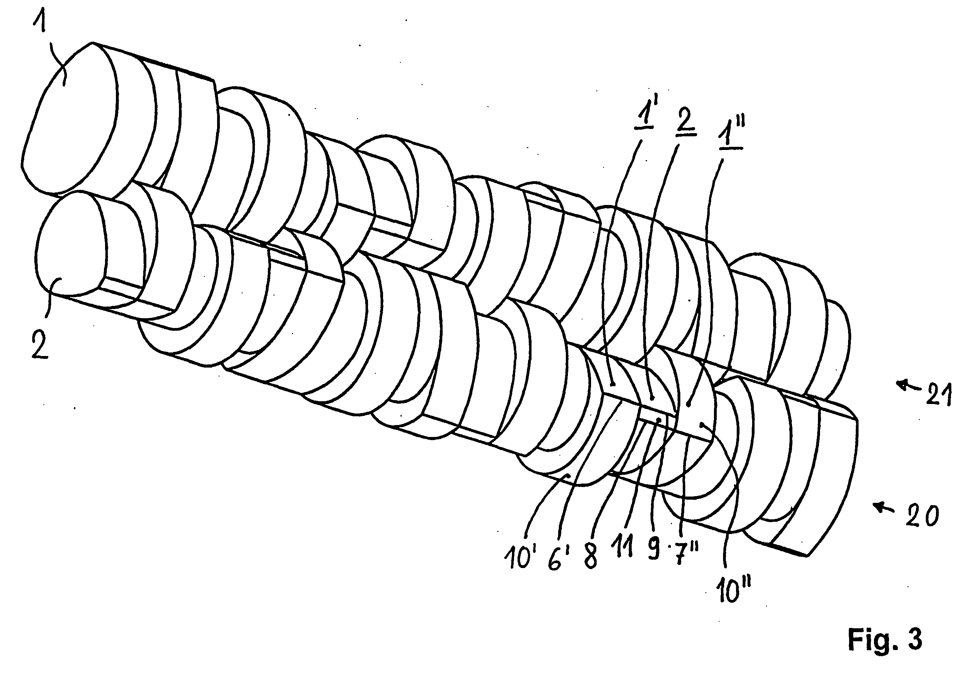

Dies ist in Figur 3 für die beiden Schneckenwellen 20, 21 exemplarisch dargestellt. Auf jeder Schneckenwelle 20, 21 sind jeweils insgesamt zehn Schneckenelemente 1 mit großem Kammwinkel und zehn Schneckenelemente 2 mit kleinem Kammwinkel, also insgesamt zwanzig Schneckenelemente angeordnet. Die Schneckenelemente 1 mit großem Kammwinkel sind dabei jeweils um einen solchen in der Figur 3 nicht dargestellten Versatzwinkel $\varepsilon$ gegeneinander verdreht, dass die vorstehend zu Figur 2 beschriebene koaxiale Ausrichtung der einander zugeordneten Stegkanten gewährleistet ist.

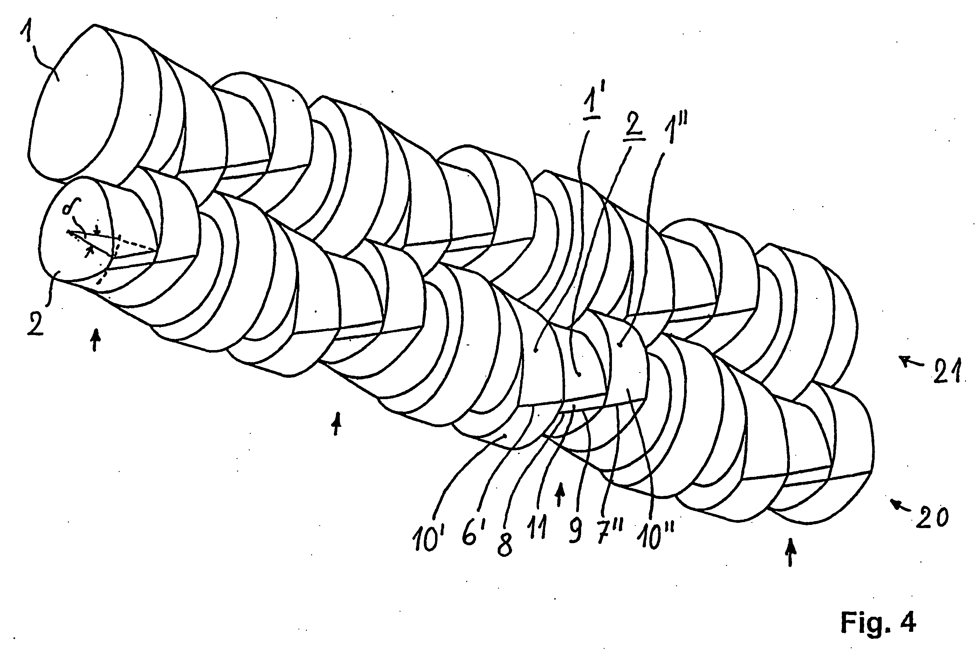

In Figur 4 ist eine Abwandlung der Anordnung der beiden Schneckenwellen 20, 21 aus Figur 3 dargestellt. Diese unterscheidet sich dadurch, dass die einzelnen Schneckenelemente 1, 2 in sich verwunden sind. Die beiden axialen Stirnseiten der Schneckenelemente 1, 2 sind um einen Verdrallwinkel $\delta$ gegeneinander um die Längsachse der Schneckenwelle 20, 21 verdreht. Exemplarisch ist der Verdrallwinkel $\delta$ für das links außen angeordnete erste Schneckenelement 2 mit kleinem Kammwinkel angedeutet. Die links außen dargestellten beiden ersten Schneckenelemente 1, 2 der beiden Schneckenwellen 20, 21 sind in den beiden Figuren 3 und 4 jeweils in der gleichen Winkelstellung dargestellt. Man erkennt sehr deutlich, dass sich durch den Verdrallwinkel δ Ober die Länge der beiden Schnek-kenwellen 20, 21 gemäß Figur 4 deutliche Unterschiede zu der Konstellation gemäß Figur 3 ergeben. Während sich in Figur 3 die Winkelstellung zweier jeweils unmittelbar nebeneinander angeordneter Schneckenelemente 1, 2 über die Anzahl von zwanzig Paarungen der Schneckenwellen nicht wiederholt, ist bei der Schneckenwelle 20 in Figur 4, wie dies durch die vier eingetragenen vertikalen Pfeile kenntlich gemacht ist, eine vierfache Wiederholung der Winkelstellung der beiden ersten Schneckenelemente 1, 2 zu erkennen; jedes sechste Schneckenelement 1, 2 auf einer Schneckenwelle 20, 21 besitzt nämlich wieder dieselbe Winkelstellung.

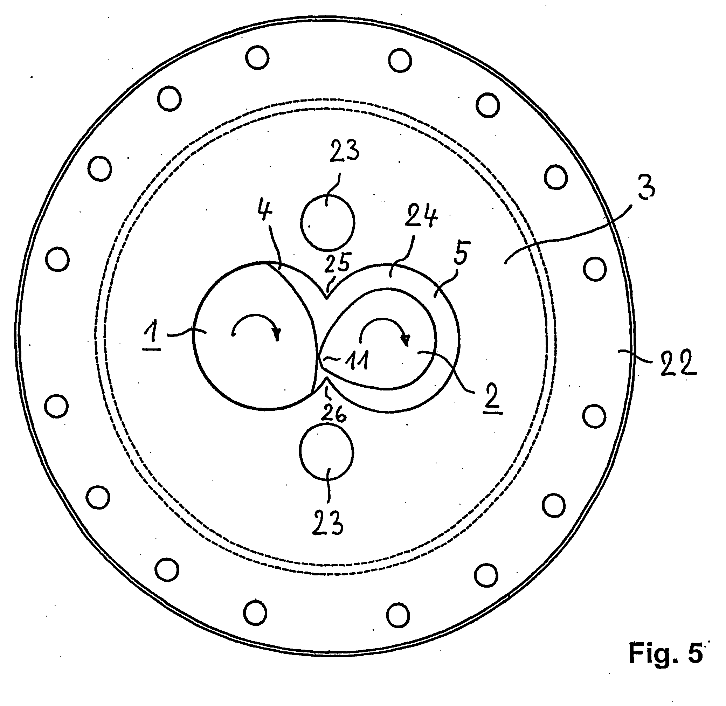

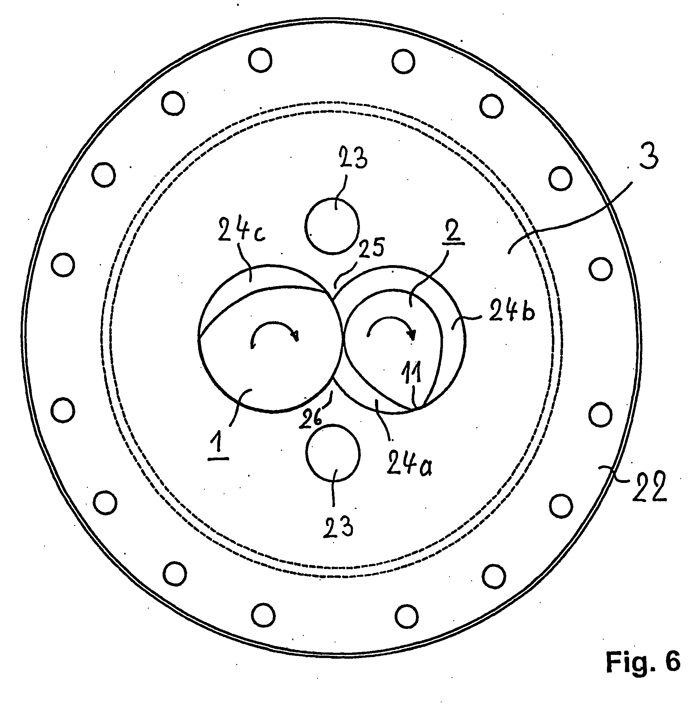

Die Figuren 5 und 6 zeigen jeweils in einer stimseitigen Ansicht die erfindungsgemäße Schneckenpumpe in unterschiedlichen Winkelstellungen der beiden ersten Schneckenelemente 1, 2. Das Pumpengehäuse 3, in dem die Gehäusebohrungen 4, 5 angeordnet sind, weist einen mit zahlreichen Durchgangsbohrungen versehenen Flansch 22 auf, mit dem die erfindungsgemäße Schneckenpumpe als Gehäuseabschnitt in einen herkömmlichen Doppelschnek-kenextruder eingesetzt und montiert werden kann. Das Pumpengehäuse ist mit zwei Stiftbohrungen 23 für das Einsetzen von Passstiften versehen. In der in Figur 5 dargestellten Position hat sich im Bereich der beiden Schneckenelemente 1, 2 innerhalb der beiden Gehäusebohrungen 4, 5 ein zusammenhängendes Kammervolumen 24 gebildet. Das Kammervolumen verändert sich bei der Drehung der Schneckenelemente 1, 2 zunächst nicht hinsichtlich seiner Größe, sondern lediglich hinsichtlich seiner Form. Dies ändert sich allerdings, sobald der Steg 11 des Schneckenelements 2 mit dem kleinen Kammwinkel im oberen Zwickelbereich 25 des Pumpengehäuses 3 zur dichten Anlage kommt und sich weiter entlang der Gehäusebohrung 5 bewegt. Dann entstehen nämlich aus dem einen Kammervolumen 24 drei Kammerteilvolumen 24a, 24 b, 24c, wie dies aus der in einer fortgeschrittenen Winkelstellung dargestellten Abbildung der Figur 6 hervorgeht. Das Kammerteilvolumen 24c verändert dabei während eines großen Teils der Umdrehung weder sein Volumen noch seine Form. Das eingeschlossene Material wird lediglich verschoben. Das Kammerteilvolumen 24b wächst demgegenüber in seiner Größe an. Umgekehrt vermindert das Kammerteilvolumen 24a das nahe am unteren Zwickelbereich 26 des Pumpengehäuses 3 liegt, seine Größe mit zunehmender Rechtsdrehung. Das bedeutet, dass in das Kammerteilvolumen 24b Material eingezogen und aus dem Kammerteilvolumen 24a Material herausgedrückt wird. Da die erfindungsgemäße Schneckenpumpe durch die vorstehend beschriebene Kammerbildung im Bereich der einzelnen Schneckenelemente zwischen dem Eintrittsquerschnitt und dem Austrittsquerschnitt axial dicht ist, findet innerhalb der Schneckenpumpe eine volumetrische Zwangsförderung statt. Daher lässt sich mit einer solchen Pumpe ein sehr effektiver Druckaufbau bewirken.

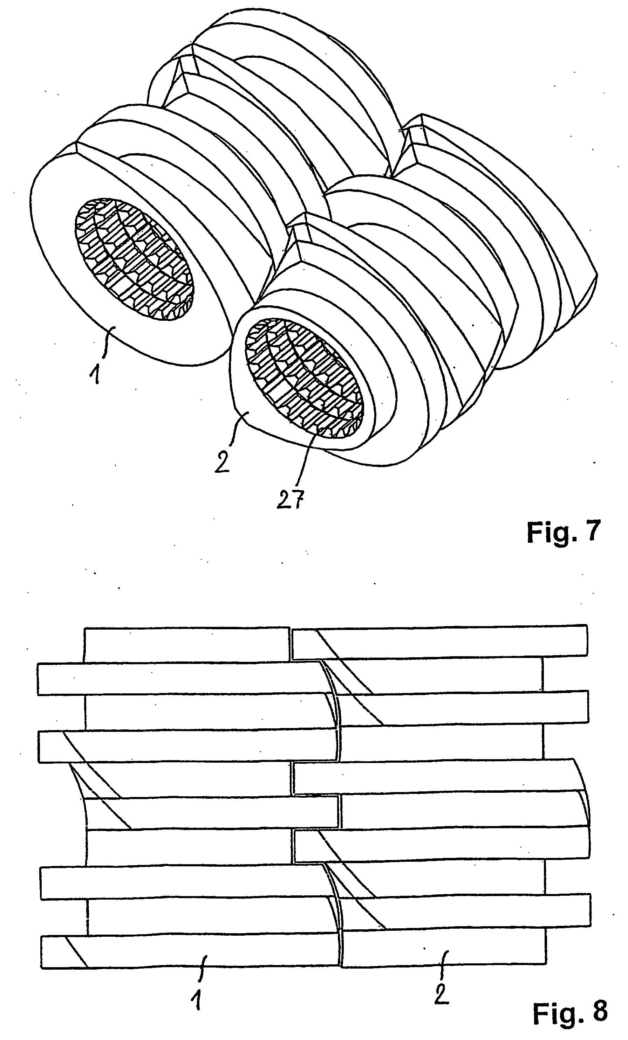

In Figur 7 ist ein weiteres Beispiel für erfindungsgemäße Schneckenelemente 1, 2 mit einem Verdrallwinkel δ >0° perspektivisch dargestellt. Es handelt sich um insgesamt 10 Paarungen, die entsprechend ihrer vorgesehenen Montage auf jeweils einem (nicht dargestellten) Wellenkem axial nebeneinander aufgereiht sind und zur drehfesten Verbindung mit dem Wellenkern jeweils über eine Vielkeilverzahnung 27 verfügen.

Die Figur 8, die diese Anordnung in einer Draufsicht zeigt, lässt erkennen, dass die Schneckenelemente 1 mit dem großen Kammwinkel jeweils geringfügig schmaler gefertigt sind als die Schneckenelemente 2 mit dem kleinen Kammwinkel, um das erforderliche Axialspiel zu gewährleisten.

In einer praktischen Ausführung der erfindungsgemäßen Schneckenpumpe wurden folgende Abmessungen verwendet:

$R_a$ = 30 mm
$R_i$ = 20,56 mm
$\gamma_1 = \alpha_2$ = 219,84°
$\gamma_2 = \alpha_1$ = 9,84°
a = 50,56 mm
s = 120°
δ = 15°.

Bei einer alternativen Ausführung mit einem Verdrallwinkel δ = 0° wurde ein Versatzwinkel von ε = 150° eingestellt. Die axiale Länge der Schneckenelemente betrug jeweils 20 mm.

Von besonderem Vorteil hierbei ist es, dass die Elemente der zweiwelligen Schneckenpumpe sich in sehr einfacher Weise in die Schneckenwellen eines herkömmlichen Doppelschneckenextruders mit gleichsinnig angetriebenen Schneckenwellen integrieren lassen. Im Unterschied zu der integrierten Zahnradpumpe gemäß EP 0564884 A1 sind hierbei beide Wellen der Pumpe unmittelbar angetrieben, so dass eine hohe Drehmomentfestigkeit gegeben ist. Die erfindungsgemäße Lösung zeichnet sich durch eine geringe Teilevielfalt und entsprechend geringe Herstellkosten aus. Die Funktionssicherheit ist außerordentlich hoch und der Wartungsaufwand praktisch Null. Gegenüber Druckaufbauzonen mit herkömmlichen Schneckenelementen ergeben sich drastisch reduzierte axiale Baulängen. Da der Konstruktionsaufwand vergleichsweise gering ist, können ohne weiteres individuelle Auslegungen zur optimalen Verfahrensanpassung in Sondermaschinen erfolgen. Die erfindungsgemäße Schneckenpumpe lässt sich problemlos in bereits vorhandenen Maschinen nachrüsten.

**Bezugszeichenliste**

| Nr. | Bezeichnung |
|---|---|
| 1 | Schneckenelement mit großem Kammwinkel |
| 2 | Schneckenelement mit kleinem Kammwinkel |
| 3 | Pumpengehäuse |
| 4 | Gehäusebohrung |
| 5 | Gehäusebohrung |
| 6 | linke Stegkante |
| 7 | rechte Stegkante |
| 8 | linke Stegkante |
| 9 | rechte Stegkante |
| 10 | Steg |
| 11 | Steg |
| 12 | Grund |
| 13 | Grund |
| 14a, 14b | Flanke |
| 15a, 15b | Flanke |
| 16-19 | Punkt zwischen Flanke und Grund |
| 20 | Schneckenwelle |
| 21 | Schneckenwelle |
| 22 | Flansch |
| 23 . | Stiftbohrung |
| 24 | Kammervolumen |
| 24 a - c | Kammerteilvolumen |
| 25 | oberer Zwickelbereich |
| 26 | unterer Zwickelbereich |
| 27 | Vielkeilverzahnung |
| $\alpha$ | Grundwinkel |
| $\beta$ | Flankenwinkel |
| $\gamma$ | Kammwinkel |
| $\delta$ | Verdrallwinkel |
| $\varepsilon$ | Versatzwinkel |
| a | Achsabstand |
| $R_a$ | Radius Schneckensteg |
| $R_i$ | Radius Schneckengrund |

**Patentansprüche**

1.  Schneckenpumpe mit einem Eintrittsquerschnitt und einem Austrittsquerschnitt zur Förderung fließfähiger Medien, insbesondere Kunststoffschmelzen und Kautschukmischungen, mit zumindest zwei in einem Pumpengehäuse (3), das zumindest zwei sich teilweise überlappende, das Pumpengehäuse (3) in Längsrichtung durchsetzende Gehäusebohrungen (4, 5) aufweist, angeordneten Schneckenwellen (20, 21) mit einem Achsabstand a, die gleichsinnig drehend antreibbar sind und auf denen drehfest eine Vielzahl von Anordnungen miteinander im Wesentlichen dicht kämmender eingängiger Schneckenelemente (1, 2) angeordnet sind, mit folgenden Merkmalen:

- Die Schneckenelemente (1, 2) weisen jeweils im axialen Querschnitt, von der Längsachse der Schneckenwelle (20, 21) aus gesehen, einen zylindermantelförmigen Steg (10, 11) auf, dessen Radius $R_a$ dem Radius der Gehäusebohrung (4, 5) entspricht und der sich in Umfangsrichtung zwischen zwei Stegkanten (6, 7; 8, 9) über einen Kammwinkel $\gamma$ erstreckt;

- Die Schneckenelemente (1, 2) weisen auf der dem Steg (10, 11) diametral gegenüber liegenden Seite jeweils einen zylindermantelförmigen Grund (12, 13) auf, dessen Radius $R_i$ der Differenz des Achsabstandes a und des Radius $R_a$ entspricht und der sich in Umfangsrichtung über einen Grundwinkel a erstreckt;

- Der Grund (12, 13) und der Steg (10, 11) eines Schneckenelements (1, 2) sind jeweils durch Flanken (14a, 14b; 15a, 15b) miteinander verbunden;

- Die Schneckenelemente (1, 2) sind **dadurch gekennzeichnet, daß** sie innerhalb einer Anordnung von miteinander kämmenden Schneckenelementen jeweils unterschiedliche Kammwinkel $\gamma$ (großer Kammwinkel $\gamma_1$, kleiner Kammwinkel $\gamma_2$) aufweisen und auf den Schneckenwellen (20, 21) axial hintereinander in der Weise angeordnet sind dass auf allen Schneckenwellen (20, 21) jeweils ein Schneckenelement (2) mit dem kleinen Kammwinkel ($\gamma_2$) einer Anordnung von miteinander kämmender Schneckenelementen mit dem Schneckenelement (1) mit dem großen Kammwinkel ($\gamma_1$) der unmittelbar benachbarten Anordnung abwechselt;

- Zwei axial zueinander nächstliegende Schneckenelemente (1', 1") mit jeweils dem großen Kammwinkel ($\gamma_1$), zwischen denen jeweils nur ein Schneckenelement mit dem kleinen Kammwinkel ($\gamma_2$) liegt, sind jeweils in der Weise um einen Versatzwinkel ($\varepsilon$) verdreht zueinander auf der Schneckenwelle (20, 21) angeordnet, dass je nach vorgesehener Förderrichtung die linke (6') oder rechte Stegkante (7') des einen Schneckenelements (1') mit großem Kammwinkel ($\gamma_1$) in der Nähe der jeweils anderen (rechte bzw. linke) Stegkante (7" bzw. 6") des anderen Schnekkenelements (1") liegt und die Stege (10', 10") der Schneckenelemente (1', 1 ") mit dem großen Kammwinkel ($\gamma_1$) jeweils im Bereich der nahe beieinander liegenden Stegkanten (6', 7" bzw. 7', 6") durch den Steg (11) des dazwischen angeordneten Schnekkenelements (2) mit dem kleinen Kammwinkel ($\gamma_2$) verbunden sind, so dass jeweils ein Schneckengang mit unstetiger Steigung gebildet ist.

2. Schneckenpumpe nach Anspruch 1,
   **dadurch gekennzeichnet,**
   **dass** der Versatzwinkel e so gewählt ist, dass die nahe beieinander liegenden Stegkanten (6', 7" bzw. 7', 6") der Schneckenelemente (1', 1") mit dem großen Kammwinkel ($\gamma_1$) sich jeweils ohne Versatz in einer anderen Stegkante (8, 9) des dazwischen angeordneten Schneckenelements (2) mit dem kleinen Kammwinkel ($\gamma_2$) fortsetzen.

3. Schneckenpumpe nach einem der Ansprüche 1 - 2,
   **dadurch gekennzeichnet,**
   **dass** die Anordnungen der miteinander kämmenden Schneckenelemente (1, 2) untereinander gleich sind.

4. Schneckenpumpe nach einem der Ansprüche 1 - 3,
   **dadurch gekennzeichnet,**
   **dass** die Schneckenelemente (1, 2) jeweils einen Verdrallwinkel ($\delta$) aufweisen, um den die axialen Stirnseiten des jeweiligen Schneckenelements (1, 2) gegeneinander um die Längsachse der Schneckenwelle (20, 21) verdreht sind.

5. Schneckenpumpe nach Anspruch 4,
   **dadurch gekennzeichnet**
   **dass** der Verdrallwinkel ($\delta$) im Bereich von 10° bis 30°, insbesondere im Bereich von 20° bis 26° liegt.

6. Schneckenpumpe nach einem der Ansprüche 1 - 5,
   **dadurch gekennzeichnet,**
   **dass** der kleinere Kammwinkel ($\gamma_2$) bei einer Anordnung von miteinander kämmenden Schneckenelementen (1, 2) jeweils weniger als 20° beträgt.

**7.** Schneckenpumpe nach einem der Ansprüche 1-6,
**dadurch gekennzeichnet,**
**dass** die Schneckenelemente (1, 2) jeweils einstückig ausgebildet sind.

**8.** Schneckenpumpe nach einem der Ansprüche 1 - 6,
**dadurch gekennzeichnet,**
**dass** die Schneckenelemente (1, 2), insbesondere bei einem Verdrallwinkel $\delta$ = 0°, jeweils aus einer Mehrzahl scheibenförmiger Elemente mit gleicher Kontur zusammengesetzt sind.

**9.** Schneckenpumpe nach einem der Ansprüche 1 - 8,
**dadurch gekennzeichnet,**
**dass** die Flanken (14a, 14b; 15a, 15b) der Schneckenelemente (1, 2) kreisbogenförmig ausgebildet sind.

**10.** Schneckenpumpe nach einem der Ansprüche 3 - 9,
**dadurch gekennzeichnet,**
**dass** die Schneckenelemente (1) mit dem großen Kammwinkel $\gamma_1$ zur Erzeugung eines Axialspiels jeweils mit gegenüber den Schneckenelementen (2) mit dem kleinen Kammwinkel ($\gamma_2$) leicht unterschiedlicher axialer Länge ausgebildet sind.

**11.** Mehrschneckenextruder mit zumindest zwei gleichsinnig angetriebenen Schneckenwellen, die in axialer Richtung zur Bildung unterschiedlicher Extruderabschnitte mit verschiedenen Schneckenelementen bestückt sind, und mit einer Druckerhöhungszone,
**dadurch gekennzeichnet,**
**dass** die Druckerhöhungszone als Schmelzenpumpe gemäß einem der Ansprüche 1 - 10 ausgebildet ist, wobei die Schneckenwellen (20, 21) der Schneckenpumpe mit den Schneckenwellen des Extruders gekoppelt oder ein Teil davon sind.

## Claims

**1.** Screw pump having an inlet cross-section and an outlet cross-section for conveying flowable media, in particular plastic material melts and rubber mixtures, having at least two screw shafts (20, 21) disposed in a pump housing (3) which has at least two partially overlapping housing borings (4, 5) penetrating the pump housing (3) in the longitudinal direction, and which screw shafts have an axial spacing a, can be actuated so as to rotate in the same direction and on which a multiplicity of arrangements of single-flight screw elements (1, 2), which mesh with each other in a substantially sealed manner, are disposed non-rotatably, having the following features:

- the screw elements (1, 2) respectively have a cylinder casing-like web (10, 11) in axial cross-section, observed from the longitudinal axis of the screw shaft (20, 21), the radius $R_a$ of which web corresponds to the radius of the housing boring (4, 5) and which web extends in the circumferential direction between two web edges (6, 7; 8, 9) over a meshing angle $\gamma$;

- the screw elements (1, 2) respectively have a cylinder casing-like base (12, 13) on the side situated diametrically opposite the web (10, 11), the radius $R_1$ of which base corresponds to the difference of the axial spacing a and of the radius $R_a$ and which extends in the circumferential direction over a base angle a;

- the base (12, 13) and the web (10, 11) of a screw element (1, 2) respectively are connected to each other by flanks (14a, 14b; 15a, 15b);

- the screw elements (1, 2) are **characterised in that**, within an arrangement of mutually meshing screw elements respectively, they have different meshing angles $\gamma$ (large meshing angle $\gamma_1$, small meshing angle $\gamma_2$) and are disposed on the screw shafts (20, 21) axially one behind the other in such a manner that, on all the screw shafts (20, 21) respectively, a screw element (2) with the small meshing angle ($\gamma_2$) of one arrangement of mutually meshing screw elements alternates with the screw element (1) with the large meshing angle ($\gamma_1$) of the directly adjacent arrangement;

- two screw elements (1', 1") which are nearest to each other axially, with respectively the large meshing angle ($\gamma_1$), between which respectively only one screw element with the small meshing angle ($\gamma_2$) is situated, are disposed respectively in such a manner rotated by an offset angle ($\varepsilon$) relative to each other on the screw shaft (20, 21) that, according to the provided conveying direction, the left (6') or right web edge (7') of the one screw element (1') with the large meshing angle ($\gamma_1$) is situated in the vicinity of the respectively other (right or left) web edge (7" or 6") of the other screw element (1") and the webs (10', 10") of the screw elements (1', 1") with the large meshing angle ($\gamma_1$) are connected by the web (11) of the therebetween disposed screw element (2) with the small meshing angle ($\gamma_2$) respectively in the region of the closely adjacent web edges (6', 7" or 7', 6") so that respectively one screw thread is formed with a non-constant pitch.

2. Screw pump according to claim 1,
   **characterised in that**
   the offset angle ($\varepsilon$) is chosen such that the closely adjacent web edges (6', 7" or 7', 6") of the screw elements (1', 1") with the large meshing angle ($\gamma_1$) are continued respectively without offset in another web edge (8, 9) of the therebetween disposed screw element (2) with the small meshing angle ($\gamma_2$).

3. Screw pump according to one of the claims 1 - 2,
   **characterised in that**
   the arrangements of the mutually meshing screw elements (1, 2) relative to each other are the same.

4. Screw pump according to one of the claims 1 - 3,
   **characterised in that**
   the screw elements (1, 2) respectively have a twist angle ($\delta$) by which the axial end-sides of the respective screw element (1, 2) are rotated mutually about the longitudinal axis of the screw shaft (20, 21).

5. Screw pump according to claim 4,
   **characterised in that**
   the twist angle ($\delta$) is in the range of $10°$ to $30°$, in particular in the range of $20°$ to $26°$.

6. Screw pump according to one of the claims 1 - 5,
   **characterised in that**
   the smaller meshing angle ($\gamma_2$) in an arrangement of mutually meshing screw elements (1, 2) respectively is less than $20°$.

7. Screw pump according to one of the claims 1 - 6,
   **characterised in that**
   the screw elements (1, 2) respectively are configured in one piece.

8. Screw pump according to one of the claims 1 - 6,
   **characterised in that**
   the screw elements (1, 2), in particular in the case of a twist angle $\delta = 0°$, are composed respectively of a plurality of disc-shaped elements with the same contour.

9. Screw pump according to one of the claims 1 - 8,
   **characterised in that**
   the flanks (14a, 14b; 15a, 15b) of the screw elements (1, 2) have an arcuate configuration.

10. Screw pump according to one of the claims 3 - 9,
    **characterised in that**
    the screw elements (1) with the large meshing angle ($\gamma_1$) are configured respectively with a slightly different axial length relative to the screw elements (2) with the small meshing angle ($\gamma_2$) in order to produce an axial clearance.

11. Multi-screw extruder having at least two screw shafts, which are actuated in the same direction and fitted with different screw elements in the axial direction in order to form different extruder portions, and having a pressure increase zone,
    **characterised in that**
    the pressure increase zone is configured as a melt pump according to one of the claims 1 - 10, the screw shafts (20, 21) of the screw pump being coupled with the screw shafts of the extruder or being a part thereof.

**EP 1 365 906 B1**

**Revendications**

1. Pompe à vis avec une section transversale d'entrée et une section transversale de sortie pour transporter des fluides en écoulement, en particulier des masses fondues de matière plastique et des mélanges de caoutchouc, comprenant au moins deux arbres de vis (20, 21) avec un entraxe a agencés dans un carter de pompe (3) qui présente au moins deux ouvertures de carter (4, 5) se chevauchant en partie, traversant le carter de pompe (3) dans le sens longitudinal, qui peuvent être entraînés en rotation dans le même sens et sur lesquels sont agencés de manière fixe une pluralité d'agencements d'éléments de vis (1, 2) à pas simple s'engrenant entre eux essentiellement de manière jointive, possédant les caractéristiques suivantes :

   - les éléments de vis (1, 2) présentent chacun, dans la section transversale axiale quand on regarde depuis l'axe longitudinal de l'arbre de vis (20, 21), une ailette en forme d'enveloppe cylindrique (10, 11) dont le rayon $R_a$ correspond au rayon de l'ouverture de carter (4, 5) et qui s'étend dans le sens circonférentiel entre deux bords d'ailette (6, 7 ; 8, 9) sur un angle d'engrènement $\gamma$ ;
   - les éléments de vis (1, 2) présentent chacun, du côté diamétralement opposé à l'ailette (10, 11), un fond en forme d'enveloppe cylindrique (12, 13) dont le rayon $R_i$ correspond à la différence entre l'entraxe a et le rayon $R_a$ et qui s'étend dans le sens circonférentiel sur un angle de fond a ;
   - le fond (12, 13) et l'ailette (10, 11) d'un élément de vis (1, 2) sont reliés entre eux par des flancs (14a, 14b ; 15a, 15b) ;
   - les éléments de vis (1, 2) sont **caractérisés en ce qu'**ils présentent chacun, à l'intérieur d'un agencement d'éléments de vis s'engrenant entre eux, des angles d'engrènement $\gamma$ différents (grand angle d'engrènement $\gamma 1$, petit angle d'engrènement $\gamma 2$) et sont agencés sur les arbres de vis (20, 21) les uns derrière les autres dans le sens axial de telle manière que sur tous les arbres de vis (20, 21) un élément de vis (2) ayant le petit angle d'engrènement ($\gamma 2$) d'un agencement d'éléments de vis s'engrenant entre eux alterne avec l'élément de vis (1) ayant le grand angle d'engrènement ($\gamma 1$) de l'agencement immédiatement voisin ;
   - deux éléments de vis voisins l'un de l'autre dans le sens axial (1', 1") ayant le grand angle d'engrènement ($\gamma 1$), entre lesquels se trouve seulement un élément de vis ayant le petit angle d'engrènement ($\gamma 2$), sont agencés chacun sur l'arbre de vis (20, 21) en étant tournés l'un par rapport à l'autre d'un angle de décalage ($\varepsilon$) de telle manière que, suivant le sens de transport prévu, le bord d'ailette gauche (6') ou droit (7') d'un élément de vis (1') ayant le grand angle d'engrènement ($\gamma 1$) se trouve à proximité de l'autre bord d'ailette (gauche ou droit) (7" ou 6") de l'autre élément de vis (1") et les ailettes (10', 10") des éléments de vis (1', 1") ayant le grand angle d'engrènement ($\gamma 1$) sont reliées, dans la zone des bords d'ailette situés à proximité l'un de l'autre (6', 7" ou 7', 6") par l'ailette (11) de l'élément de vis (2) ayant le petit angle d'engrènement ($\gamma 2$) agencé entre eux, de telle sorte qu'une spire de vis à pas variable est formée.

2. Pompe à vis selon la revendication 1, **caractérisée en ce que** l'angle de décalage ($\varepsilon$) est choisi de manière à ce que les bords d'ailette (6', 7" ou 7', 6") situés à proximité l'un de l'autre des éléments de vis (1', 1") ayant le grand angle d'engrènement ($\gamma 1$) se poursuivent chacun sans décalage dans un autre bord d'ailette (8, 9) de l'élément de vis (2) ayant le petit angle d'engrènement ($\gamma 2$) agencé entre eux.

3. Pompe à vis selon l'une des revendications 1 ou 2, **caractérisée en ce que** les agencements des éléments de vis (1, 2) s'engrenant entre eux sont identiques entre eux.

4. Pompe à vis selon l'une des revendications 1 à 3, **caractérisée en ce que** les éléments de vis (1, 2) présentent chacun un angle de torsion ($\delta$) selon lequel les faces frontales axiales de l'élément de vis correspondant (1, 2) sont tournées les unes par rapport aux autres autour de l'axe longitudinal de l'arbre de vis (20, 21).

5. Pompe à vis selon la revendication 4, **caractérisée en ce que** l'angle de torsion ($\delta$) est situé dans la plage allant de 10° à 30°, en particulier dans la plage allant de 20° à 26°.

6. Pompe à vis selon l'une des revendications 1 à 5, **caractérisée en ce que** le petit angle d'engrènement ($\gamma 2$) est inférieur à 20° dans le cas d'un agencement d'éléments de vis s'engrenant entre eux (1, 2).

**7.** Pompe à vis selon l'une des revendications 1 à 6,
**caractérisée en ce que** les éléments de vis (1, 2) sont conçus d'un seul tenant.

**8.** Pompe à vis selon l'une des revendications 1 à 6,
**caractérisée en ce que** les éléments de vis (1, 2), en particulier dans le cas d'un angle de torsion $\delta = 0$ °, sont composés d'une pluralité d'éléments en forme de disque de contour identique.

**9.** Pompe à vis selon l'une des revendications 1 à 8,
**caractérisée en ce que** les flancs (14a, 14b ; 15a, 15b) des éléments de vis (1, 2) sont en forme d'arc de cercle.

**10.** Pompe à vis selon l'une des revendications 3 à 9,
**caractérisée en ce que** les éléments de vis (1) ayant le grand angle d'engrènement ($\gamma 1$) sont prévus chacun avec une longueur axiale légèrement différente par rapport aux éléments de vis (2) ayant le petit angle d'engrènement ($\gamma 2$) afin de produire un jeu axial.

**11.** Extrudeuse à plusieurs vis comprenant au moins deux arbres de vis entraînés dans le même sens qui sont équipés de différents éléments de vis dans le sens axial pour former des tronçons d'extrudeuse différents et une zone d'élévation de pression,
**caractérisée en ce que** la zone d'élévation de pression est conçue comme une pompe de masse fondue selon l'une des revendications 1 à 10, les arbres de vis (20, 21) de la pompe à vis étant couplés avec les arbres de vis de l'extrudeuse ou étant une partie de celle-ci.

Fig. 1

Fig. 2

Fig. 3

Fig. 4

EP 1 365 906 B1

Fig. 5

EP 1 365 906 B1

Fig. 6

EP 1 365 906 B1

Fig. 7

Fig. 8